# EUROPEAN PATENT APPLICATION

(11) **EP 4 804 653 A1**
(43) Date of publication of application: **09.09.2026**
(21) Application number: 24884209.8
(22) Date of filing: 30.08.2024
(51) Int. Cl.: H04W 56/00

(54) **COMMUNICATION METHOD, COMMUNICATION SYSTEM, AND NON-VOLATILE READABLE STORAGE MEDIUM**

(30) Priority: 31.10.2023 CN 202311447897
(71) Applicant: BYD Company Limited, Shenzhen, Guangdong 518118 (CN)
(72) Inventor: HOU, Yuxiao, Shenzhen, Guangdong 518118 (CN); SHANG, Xiaoyu, Shenzhen, Guangdong 518118 (CN); PEI, Guangyu, Shenzhen, Guangdong 518118 (CN)
(74) Representative: Mathys & Squire
(86) International application number: PCT/CN2024/115804
(87) International publication number: WO 2025/092202

(57) **Abstract**

A communication method, a communication system, and a non-volatile readable storage medium are provided. The method includes: obtaining at least one of start time for transmitting a modulated signal, a preset pulse signal quantity, and a synchronization time offset of the pulse signals relative to the start time, where the modulated signal includes the preset quantity of pulse signals; and sending the modulated signal according to the start time and the synchronization time offset.

## Description

### CROSS-REFERENCE TO RELATED APPLICATIONS

This application claims priority to Chinese Patent Application No. 202311447897.8, filed with the China National Intellectual Property Administration on October 31, 2023, and entitled "COMMUNICATION METHOD, COMMUNICATION SYSTEM, AND NON-VOLATILE READABLE STORAGE MEDIUM", which is incorporated herein by reference in its entirety.

### TECHNICAL FIELD

This application relates to the field of communication technologies, and in particular, to a communication method, a communication system, and a non-volatile readable storage medium.

### BACKGROUND

As an emerging technology in the field of wireless communication, UWB (ultra wide band) is a wireless communication technology featuring an ultra-wide frequency spectrum, and is expected to be widely used as a wireless communication technology in the fields of vehicle-mounted applications, intelligent manufacturing, and the like, for example, life detection using a radar mode and digital car key application using a positioning mode. For transmitting audio, videos, or other content, data transmission based on this communication method can replace other existing wired or wireless technologies, thereby reducing costs.

In related art, if a communication device performs multi-tag transmission during communication, data overlap is likely to occur, which causes interference to signal transmission, resulting in low data transmission efficiency.

### SUMMARY

This application is intended to resolve at least one of technical problems existing in conventional technologies.

Therefore, one purpose of this application is to provide a communication method. The method avoids interference caused by overlapping pulse signals during transmission, and achieves synchronous interleaved transmission of a modulated signal while improving efficiency and accuracy of the synchronous transmission, to enhance an uplink transmission rate.

Therefore, a second purpose of this application is to provide a communication method.

Therefore, a third purpose of this application is to provide a communication system.

Therefore, a fourth purpose of this application is to provide a non-volatile readable storage medium.

To fulfill the foregoing purpose, an embodiment according to a first aspect of this application provides a communication method. The communication method is applied to a first communication device, and the method includes: obtaining at least one of a start time for transmitting a modulated signal, a preset pulse signal quantity, and a synchronization time offset of the pulse signals relative to the start time, wherein the modulated signal includes the preset quantity of pulse signals; and sending the modulated signal according to the start time and the synchronization time offset.

According to the communication method according to this embodiment of this application, the pulse signals are sent in a synchronous and interleaved way according to the start time for the modulated signal and the synchronization time offset of the pulse signals, so that valid pulses of each pulse signal within a tag symbol period are staggered and do not overlap each other, thereby avoiding interference caused by overlapping pulse signals during transmission, and achieving synchronous interleaved transmission of a modulated signal while improving the efficiency and accuracy of the synchronous transmission, to enhance the uplink transmission rate.

In some embodiments, sending the modulated signal according to the start time and the synchronization time offset includes: determining a transmission sequence for the pulse signals according to the start time and the synchronization time offset; and synchronously sending the pulse signals according to the transmission sequence.

In some embodiments, determining the transmission sequence for the modulated signal according to the start time and the synchronization time offset includes: obtaining the transmission sequence for the pulse signals according to the start time plus the synchronization time offset.

In some embodiments, before obtaining the start time for transmitting the modulated signal, the preset pulse signal quantity, and the synchronization time offset of the pulse signals relative to the start time, the method further includes: determining a multi-tag synchronous transmission mode for the modulated signal.

In some embodiments, determining that a mode for transmitting the modulated signal is the multi-tag synchronous transmission mode includes: setting a preset bit in a physical-layer header data format to a first preset value.

In some embodiments, determining that the mode for transmitting the modulated signal is the multi-tag synchronous transmission mode includes: determining that the mode for transmitting the modulated signal is the multi-tag synchronous transmission mode when a 17^{th} reserved bit in the physical-layer header data format is the first preset value; and determining that the mode for transmitting the modulated signal is a regular transmission mode when the 17^{th} reserved bit in the physical-layer header data format is a second preset value.

In some embodiments, obtaining at least one of the start time for transmitting the pulse signals, the preset pulse signal quantity, and the synchronization time offset of the pulse signals relative to the start time during the signal transmission performed by the first communication device includes: obtaining frame payload information in a MAC (Medium Access Control) control frame structure, where the frame payload information includes at least one of the start time for transmitting the modulated signal, the preset pulse signal quantity, the synchronization time offset of the pulse signals relative to the start time, and a MAC address of each pulse signal.

To fulfill the foregoing purpose, an embodiment according to a second aspect of this application provides a communication method. The communication method is applied to a second communication device, and the method includes: receiving a modulated signal according to a start time and a synchronization time offset; and demodulating the modulated signal.

According to the communication method in this embodiment of this application, the modulated signal is received according to the start time and the synchronization time offset, and the modulated signal is demodulated after the modulated signal is received. During the demodulation of the modulated signal, as the synchronization time offset is present in sending time, a preset quantity of pulse signals to be received are received correspondingly according to the synchronization time offset, and a tag category that the pulse signals belong to is determined after the receiving is completed. In this way, sequential demodulation of modulated signals can be achieved, and interference caused by overlapping pulse signals during the receiving is avoided, thereby avoiding affecting a demodulation process. Therefore, received modulated signals are synchronously demodulated, to reduce the limitation on a UWB transmission rate due to a distance in a mobile terminal scenario, and improve a UWB uplink synchronous transmission rate.

In some embodiments, the modulated signal includes a preset quantity of pulse signals, and the demodulating the modulated signal includes: obtaining rising edge time of a valid pulse signal in the pulse signals and initial reference time for a tag category that the pulse signals belong to, or obtaining falling edge time of a valid pulse signal in the pulse signals and initial reference time for a tag category that the pulse signals belong to; and determining in sequence, according to the rising edge time and the initial reference time, the tag category that the pulse signals belong to, or determining in sequence, according to the falling edge time and the initial reference time, the tag category that the pulse signals belong to.

In some embodiments, determining in sequence, according to the rising edge time and the initial reference time, the tag category that the pulse signals belong to, or determining in sequence, according to the falling edge time and the initial reference time, the tag category that the pulse signals belong to includes: determining, according to a value of time difference between the rising edge time and the initial reference time, the tag category that the pulse signals belong to, or determining, according to a value of time difference between the falling edge time and the initial reference time, the tag category that the pulse signals belong to.

In some embodiments, determining, according to a value of time difference between the rising edge time and the initial reference time, the tag category that the pulse signals belong to, or determining, according to a value of time difference between the falling edge time and the initial reference time, the tag category that the pulse signals belong to includes: determining a target tag corresponding to the initial reference time; and determining, according to the value of time difference and the target tag, the tag category that the pulse signals belong to.

In some embodiments, determining, according to the value of time difference and the target pulse signal, the tag category that the pulse signals belong to includes: determining that the pulse signals belong to the target tag when the value of time difference is equal to an integer multiple of a symbol period of the target tag; or updating the initial reference time to obtain updated initial reference time when the value of time difference is not equal to an integer multiple of a symbol period of the target tag and determining of the category that the pulse signals belong to is not completely finished; and determining, according to the updated initial reference time and the rising edge time of the valid pulse signal, the tag category that the pulse signals belong to.

In some embodiments, after determining in sequence, according to the falling edge time and the initial reference time, the tag category that the pulse signals belong to, the method further includes: performing an action of ending demodulation of the modulated signal when a quantity of tags corresponding to the rising edge time of the valid pulse signal exceeds a preset tag quantity.

In some embodiments, the communication method further includes: performing an action of demodulating the modulated signal when the quantity of tags corresponding to the rising edge time of the valid pulse signal does not exceed the preset tag quantity.

In some embodiments, the tag category that the pulse signals belong to includes a first target tag and a second target tag, and the determining, according to the initial reference time and the rising edge time of the valid pulse signal, the tag category that the pulse signals belong to, or determining, according to the initial reference time and the falling edge time of the valid pulse signal, the tag category that the pulse signals belong to includes: determining a tag corresponding to the initial reference time as the first target tag; and determining, according to the value of time difference between the initial reference time and the rising edge time of the valid pulse signal, the tag category that the pulse signals belong to, or determining, according to the value of time difference between the initial reference time and the falling edge time of the valid pulse signal, the tag category that the pulse signals belong to.

In some embodiments, determining, according to the value of time difference between the initial reference time and the rising edge time of the valid pulse signal, the tag category that the pulse signals belong to, or determining, according to the value of time difference between the initial reference time and the falling edge time of the valid pulse signal, the tag category that the pulse signals belong to includes: determining that the pulse signals belong to the first target tag when the value of time difference is an integer multiple of a symbol period of the first target tag; or determining that the pulse signals belong to the second target tag when the value of time difference is not an integer multiple of a symbol period of the first target tag.

To fulfill the foregoing purpose, an embodiment according to a third aspect of this application provides a communication system, including: a first communication device; and a second communication device, where the first communication device and the second communication device are configured to communicate by using the communication method according to the foregoing embodiments.

According to the communication system according to this embodiment of this application, pulse signals are sent in a synchronous and interleaved way according to a start time for a modulated signal and a synchronization time offset of the pulse signals, so that valid pulses of each pulse signal within a tag symbol period are staggered and do not overlap each other, thereby avoiding interference caused by overlapping pulse signals during transmission, and achieving synchronous interleaved transmission of a modulated signal while improving the efficiency and accuracy of the synchronous transmission, to enhance the uplink transmission rate. The modulated signal is received according to the start time and the synchronization time offset, and the modulated signal is demodulated after the modulated signal is received. During the demodulation of the modulated signal, as the synchronization time offset is present in sending time, a preset quantity of pulse signals to be received are received correspondingly according to the synchronization time offset, and a tag category that the pulse signals belong to is determined after the receiving is completed. In this way, sequential demodulation of modulated signals can be achieved, and interference caused by overlapping pulse signals during the receiving is avoided, thereby avoiding affecting a demodulation process. Therefore, received modulated signals are synchronously demodulated.

To fulfill the foregoing purpose, an embodiment according to a fourth aspect of this application provides a non-volatile readable storage medium. The non-volatile readable storage medium stores a communication program, and the communication program, when executed by a processor, enables the communication device equipped with the non-volatile storage medium to implement the communication methods according to the foregoing embodiments.

Additional aspects and advantages of this application will be described in part in the following descriptions, and some parts will be apparent in the following descriptions or be understood through implementation of this application.

### BRIEF DESCRIPTION OF DRAWINGS

The foregoing and/or additional aspects and advantages of this application will be apparent and easily understood with the descriptions of embodiments with reference to the following accompanying drawings:
FIG. 1 is a schematic diagram of one symbol period for OOK (On Off Keying) modulation in a regular mode according to an embodiment of this application;
FIG. 2 is a flowchart of a communication method according to an embodiment of this application;
FIG. 3 is a flowchart of a communication method according to another embodiment of this application;
FIG. 4 is a schematic diagram of dual-tag signal synchronous transmission according to an embodiment of this application;
FIG. 5 is a schematic diagram of multi-tag signal synchronous transmission according to an embodiment of this application;
FIG. 6A and FIG. 6B are a flowchart of multi-tag signal synchronous transmission according to an embodiment of this application;
FIG. 7 is a flowchart of dual-tag signal synchronous transmission according to an embodiment of this application; and
FIG. 8 is a structural block diagram of a communication system according to an embodiment of this application.

### Reference numerals:

communication system 3,
first communication device 1, and second communication device 2.

### DESCRIPTION OF EMBODIMENTS

Embodiments of this application are described in detail below. Embodiments described with reference to the accompanying drawings are examples.

When a communication device performs signal transmission, UWB can reach a communication transmission rate of more than 100 Mbps in a short-range scenario. However, as the transmission range increases, the communication transmission rate of UWB rapidly decreases. For example, the transmission rate is 100 Mbps when the transmission range is about 12 meters, but the transmission rate rapidly decreases when the range exceeds 12 meters. Therefore, it is crucial to enhance the transmission rate of UWB for the communication of the communication device.

In related art, a MAC-layer data frame format may be modified, and each communication device, for example, a UWB communication device, performs sending at the same time by using a specified frame structure. However, in the foregoing data transmission method, a MAC-layer data frame structure needs to be modified, and a quantity of pulse signals synchronously sent by a tag is small, which not only cannot effectively improve the transmission rate, but also violates standards, leading to higher transmission difficulty.

Alternatively, according to the European ECMA (European Computer Manufacturers Association) standards, a tag stores a theoretical rate and modulation scheme of the tag, and performs multi-tag rate coordination according to this information. However, this cannot adapt to dynamic channel changes in real time. In addition, a multi-tag coordination scheme is based on forwarding, which cannot effectively utilize the transmission capability of all tags.

Alternatively, a frame structure is designed based on an algorithm of TDMA (time division multiple access) slot allocation, and whether an idle slot is present is determined by monitoring base station information included in the designed data frame, for example, an ID (Identity) of the base station and whether an idle slot is present.

An application scenario of a communication method according to the embodiments of this application is an OOK (On-Off Keying) modulation scheme in a standard UWB low-rate mode (LRP, Low Rate Pulse), and also complies with a standard MAC layer and PHY layer (physical Layer). The UWB low-rate mode includes three transmission modes: a Base mode, an Extended mode, and a Long-range mode. The Base mode is used as an example for description below.

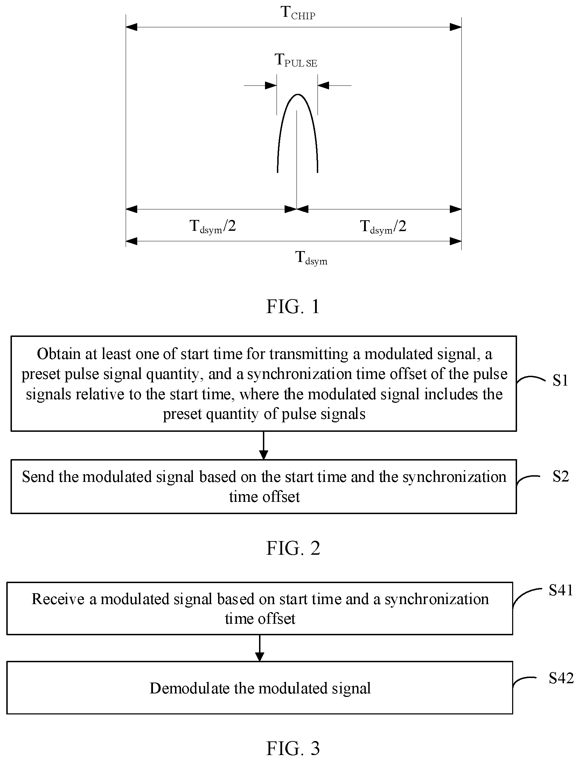

FIG. 1 is a schematic diagram of one symbol period for OOK modulation in a regular transmission mode according to an embodiment of this application. In the figure, there is only one narrow pulse based on on-off keying OOK modulation. The pulse width TPULSE is 2 ns, the whole symbol period TCHIP is 1 us, the duty cycle is 1/500. Therefore, the duty cycle has a significantly low value.

A communication method according to an embodiment of this application is described below by using an example with reference to FIG. 2. The method is applied to a first communication device.

As shown in FIG. 2, the communication method according to this embodiment of this application includes at least step S1 and step S2.

Step S1: obtain at least one of start time for transmitting a modulated signal, a preset pulse signal quantity, and a synchronization time offset of the pulse signals relative to the start time, where the modulated signal includes the preset quantity of pulse signals.

In this step, before signal transmission is performed, a communication device, for example, a UWB base station, has already coordinated start time for transmitting pulse signals and a synchronization time offset of the pulse signals relative to the start time, to implement synchronous interleaved transmission of the pulse signals. To implement synchronous interleaved transmission of the pulse signals, the start time for transmitting the pulse signals and the synchronization time offset relative to the start time need to be sent to a UWB tag before the signal transmission is performed.

In this embodiment, the preset pulse signal quantity is denoted as, for example, N. During the signal transmission, the first communication device obtains the pre-configured start time for transmitting the modulated signal, the preset pulse signal quantity, and the synchronization time offset of the pulse signals relative to the start time, to implement synchronous interleaved transmission of the preset quantity of pulse signals according to the parameters.

Step S2: send the modulated signal according to the start time and the synchronization time offset.

In this step, as the modulated signal includes the preset quantity of pulse signals, to achieve sequential interleaved transmission of the N pulse signals, the pulse signals need to be sent according to the start time and the synchronization time offset, to implement synchronous interleaved transmission of the pulse signals.

In this embodiment, after the start time for transmitting the modulated signal, the preset pulse signal quantity N, and the synchronization time offset of the pulse signals relative to the start time are determined, the modulated signal is sent by using the start time as a starting point and the synchronization time offset as an interval, to implement synchronous interleaved transmission of the pulse signals. Since a valid pulse width of the pulse signals has an extremely low duty cycle with respect to a symbol period T of one tag (for example, a UWB tag), when a plurality of UWB tags are interleaved for synchronous transmission with a precise synchronization time offset, it can ensure that valid pulses of each of the UWB tags within one UWB tag symbol period do not overlap each other. For example, the synchronization time offset between the plurality of UWB tags is set to 2 ns, to prevent overlap. A UWB communication system may allow a maximum of 250 UWB tags to synchronously perform uplink transmission. In this way, an overall transmission rate is greatly improved. In the foregoing method, interference caused by transmission time overlap is avoided, thereby improving the efficiency and accuracy of the synchronous transmission, to enhance the uplink transmission rate.

According to the communication method according to this embodiment of this application, the pulse signals are sent in a synchronous and interleaved way according to the start time for the modulated signal and the synchronization time offset of the pulse signals, so that valid pulses of each pulse signal within a tag symbol period are staggered and do not overlap each other, thereby avoiding interference caused by overlapping pulse signals during transmission, and achieving synchronous interleaved transmission of a modulated signal while improving the efficiency and accuracy of the synchronous transmission, to enhance the uplink transmission rate.

In some embodiments, sending the modulated signal according to the start time and the synchronization time offset includes: determining a transmission sequence for the pulse signals according to the start time and the synchronization time offset; and synchronously sending the pulse signals according to the transmission sequence.

In this embodiment, after the start time and the synchronization time offset for the pulse signals are determined, the transmission sequence for the pulse signals is determined according to the start time and the synchronization time offset. For example, a transmission sequence for each pulse signal is obtained according to the start time plus the synchronization time offset, and the pulse signals are synchronously sent according to the transmission sequence.

It will be understood that, since the pulse signals are synchronously sent, that is, through multi-tag sequential interleaved transmission, the pulse signals are sent according to the transmission sequence for the pulse signals, so that narrow pulses between each tag can be staggered, and a quantity of pulse signals that can be transmitted becomes larger, thereby greatly improving the uplink transmission rate.

In some embodiments, before obtaining the start time for transmitting the modulated signal, the preset pulse signal quantity, and the synchronization time offset of the pulse signals relative to the start time, the method further includes: determining a multi-tag synchronous transmission mode for the modulated signal.

In this embodiment, before the start time for transmitting the modulated signal, the preset pulse signal quantity, and the synchronization time offset of the pulse signals relative to the start time are obtained, to support a multi-tag synchronous transmission mode for the modulated signal, the physical layer PHY needs to perform function expansion according to a standard protocol, but does not change the protocol. Synchronous interleaved transmission can be achieved by utilizing a gap between standard rate modes, to effectively improve time utilization and transmission efficiency of a channel at the physical layer. Table 1 shows the physical-layer header data format PHR (Physical Header) in the LRP mode.

**Table 1**

| Bits: 0-2 | 3 | 4-9 | 10-16 | 17 | 18-20 | 21 |
|---|---|---|---|---|---|---|
| Encoding type | Header extension | Two-bit error correction | Frame length | Reserved | LEIP length | LEIP location |

In some embodiments, it will be understood from Table 1 that determining that a mode for transmitting the modulated signal is the multi-tag synchronous transmission mode includes: setting a preset bit in a physical-layer header data format to a first preset value.

In this embodiment, the preset bit is, for example, a reserved bit, and whether the transmission mode is a UWB tag synchronous transmission mode is determined according to a value of the reserved bit. It is determined that the mode for transmitting the modulated signal is the multi-tag synchronous transmission mode when the value of the reserved bit is the first preset value, for example, 1; and it is determined that the mode for transmitting the modulated signal is a regular transmission mode when the value of the reserved bit is a second preset value, for example, 0. The multi-tag transmission mode is determined by determining the value of the reserved bit, and the foregoing communication method can be performed only in the multi-tag synchronous transmission mode, to implement synchronous interleaved transmission of the pulse signals and distinguish it from the regular transmission mode.

In some embodiments, determining that a mode for transmitting the modulated signal is the multi-tag synchronous transmission mode includes: determining that the mode for transmitting the modulated signal is the multi-tag synchronous transmission mode when a 17^{th} reserved bit in the physical-layer header data format is the first preset value; and determining that the mode for transmitting the modulated signal is a regular transmission mode when the 17^{th} reserved bit in the physical-layer header data format is the second preset value.

In this embodiment, it will be understood from Table 1 that it is determined that the mode for transmitting the modulated signal is the multi-tag synchronous transmission mode when the 17^{th} reserved bit in the physical-layer header data format is the first preset value, for example, 1; and it is determined that the mode for transmitting the modulated signal is the regular transmission mode when the 17^{th} reserved bit in the physical-layer header data format is the second preset value, for example, 0. To achieve the synchronous interleaved transmission of the pulse signals, the 17^{th} reserved bit in the data format is set to the first preset value, to support the synchronous transmission of the pulse signals.

The preset bit in the physical-layer header data format PHR, that is, the 17^{th} reserved bit, is set to 1, and is used for necessary information required by a UWB tag for identifying the synchronous interleaved transmission mode. A receiver end first performs additional multi-tag synchronous transmission demodulation. If the preset bit in the physical-layer header data format PHR is 0, it is determined that the transmission mode is the regular transmission mode. By multiplexing the physical-layer header data format PHR, only a small quantity of control messages are transmitted between one-shot UWB anchors and the UWB tag, thereby improving efficiency of synchronous transmission when a data volume is large.

In some embodiments, obtaining at least one of the start time for transmitting the pulse signals, the preset pulse signal quantity, and the synchronization time offset of the pulse signals relative to the start time during the signal transmission performed by the first communication device includes: obtaining frame payload information in a MAC control frame structure, where the frame payload information includes at least one of the start time for transmitting the modulated signal, the preset pulse signal quantity, the synchronization time offset of the pulse signals relative to the start time, and a MAC address of each pulse signal.

In this embodiment, a standard MAC control frame structure is designed, and frame payload information in a MAC control frame structure, for example, the standard control frame structure, is obtained. The frame payload information includes at least one of the start time for transmitting the modulated signal, for example, in 16 bits, the preset pulse signal quantity, for example, in 8 bits, the synchronization time offset of the pulse signals relative to the start time, for example, in 16 bits, and the MAC address of each pulse signal, for example, in 64 bits. The frame payload information in the MAC control frame structure is shown in Table 2.

**Table 2**

| Bytes: 0-1 | 2-5 | 6-21 | 22-25 | 26-41 |
|---|---|---|---|---|
| Preset pulse signal quantity N | Start time for transmitting the pulse signal | MAC address of the first target tag | Synchronization time offset for the first target tag | MAC address of the first target tag |
| Bytes 41-44 | ... | ... | ... | ... |
| Synchronization time offset for a second target tag | ... | ... | MAC address of a tag N | Offset for the tag N |

According to the communication method according to this embodiment of this application, the pulse signals are sent in a synchronous and interleaved way according to the start time for the modulated signal and the synchronization time offset of the pulse signals, so that valid pulses of each pulse signal within a tag symbol period are staggered and do not overlap each other, thereby avoiding interference caused by overlapping pulse signals during transmission, and achieving synchronous interleaved transmission of a modulated signal while improving the efficiency and accuracy of the synchronous transmission, to enhance the uplink transmission rate.

A communication method according to an embodiment of this application is described below by using an example with reference to FIG. 3. The method is applied to a second communication device, for example, a UWB base station.

As shown in FIG. 3, the communication method according to this embodiment of this application includes at least step S41 and step S42.

Step S41: receive a modulated signal according to a start time and a synchronization time offset, where the modulated signal includes a preset quantity of pulse signals.

In this embodiment, after a first communication device completes UWB tag handshaking coordination with the second communication device, for example, the UWB base station, the preset quantity of pulse signals are synchronously received by using start time as a starting point and the synchronization time offset as an interval, to implement demodulation of the modulated signal.

Because the synchronous interleaved transmission of a plurality of pulse signals can gather energy, in a UWB low-rate mode, the energy attenuation of the signals in a propagation channel is greater. Therefore, it is possible that a time-domain narrow pulse with low energy is ignored by the UWB base station or processed as noise as the energy is too low. Narrow pulse symbols are synchronously transmitted by using a plurality of UWB tags, so that there are more overall energy of pulses gathering within a specific symbol period, reducing the difficulty for the UWB base station to detect the plurality of UWB tags.

Step S42: demodulate the modulated signal.

In this embodiment, after the modulated signal, for example, the preset quantity of pulse signals, is received, a superposed signal combining a plurality of pulse signals is obtained. As the pulse signals are sent according to the synchronization time offset, the superposed pulse signal is received in sequence according to a sequence for the synchronization time offset. After the preset quantity of pulse signals are obtained, a tag category that the pulse signals belong to is determined, to implement the demodulation of the modulated signal.

During the demodulation of the modulated signal, all narrow pulses are traversed in the superposed pulse signal, tag information corresponding to different narrow pulses within different time intervals is distinguished, tag categories that different pulses belong to are determined, and a quantity of bits 0 is determined according to an interval between valid pulses of a known UWB tag, to complete the demodulation of the modulated signal. By demodulating the modulated signal, the synchronous interleaved transmission and demodulation of the pulse signals are implemented, to achieve communication between the tag and the base station, reduce the limitation on a UWB transmission rate due to a distance in a mobile terminal scenario, and improve a UWB uplink synchronous transmission rate.

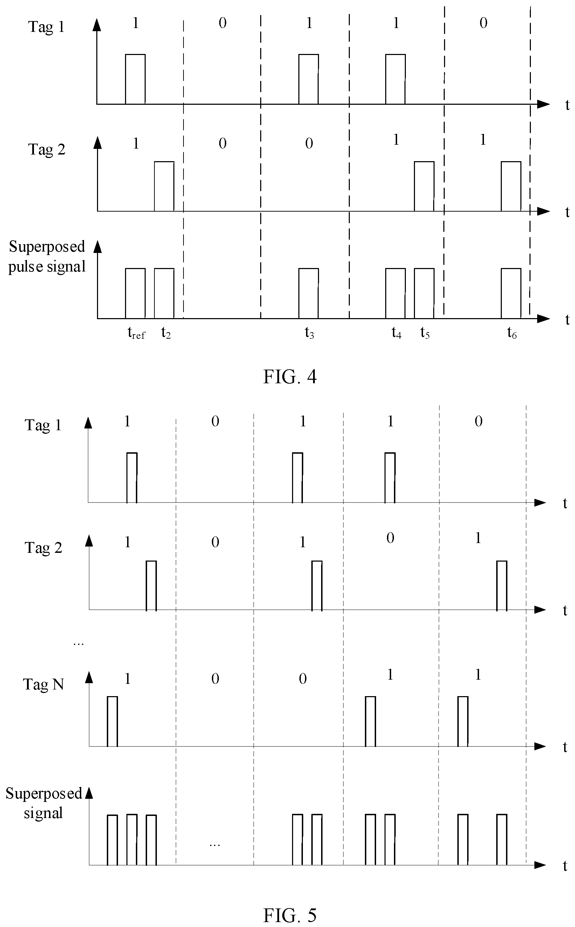

It will be understood that, the UWB base station pre-acquires a relative time sequence for the preset quantity of pulse signals in advance, and time-domain locations of all narrow pulses may be determined according to rising edge locations or falling edge locations of the pulses. For example, a rising edge location is used as a criterion for determining. For example, as shown in FIG. 4, a first target tag and a second target tag, that is, dual tags, are used. As a sequence for sending a pulse signal is already determined, the first target tag is sent before the second target tag, and symbol periods of the first target tag and the second target tag remain unchanged. For example, as shown in FIG. 5, there are N UWB pulse signals, and a transmission sequence of the pulse signals from first to last is a tag 1, a tag 2, ..., and a tag N.

According to the communication method in this embodiment of this application, the modulated signal is received according to the start time and the synchronization time offset, and the modulated signal is demodulated after the modulated signal is received. During the demodulation of the modulated signal, as the synchronization time offset is present in sending time, a preset quantity of pulse signals to be received are received correspondingly according to the synchronization time offset, and a tag category that the pulse signals belong to is determined after the receiving is completed. In this way, sequential demodulation of modulated signals can be achieved, and interference caused by overlapping pulse signals during the receiving is avoided, thereby avoiding affecting a demodulation process. Therefore, received modulated signals are synchronously demodulated, to reduce the limitation on a UWB transmission rate due to a distance in a mobile terminal scenario, and improve a UWB uplink synchronous transmission rate.

In some embodiments, the modulated signal includes the preset quantity of pulse signals, and demodulating the modulated signal includes: obtaining rising edge time of a valid pulse signal in the pulse signals and initial reference time for a tag category that the pulse signals belong to, or obtaining falling edge time of a valid pulse signal in the pulse signals and initial reference time for a tag category that the pulse signals belong to; and determining in sequence, according to the rising edge time and the initial reference time, the tag category that the pulse signals belong to, or determining in sequence, according to the falling edge time and the initial reference time, the tag category that the pulse signals belong to.

In this embodiment, after the base-station end completes a handshake protocol for the N tags, the N tags start to perform synchronous interleaved transmission according to the synchronization time offset, and the base station receives M valid pulses at the receive end. The valid pulses are pulses corresponding to a pulse signal that is 1, and rising edge time of the valid pulse signals are respectively t₁, t₂, ..., and tₘ. The rising edge time of the valid pulse is detected within one tag symbol period. Because the tags are sent in sequence, the first pulse signal comes from the tag 1, and time for a corresponding tag category is set as the initial reference time. The initial reference time is denoted, for example, as t₁, where t_{r,1} = t₁.

After the rising edge time of the pulse signal and the initial reference time are obtained, the tag category that the pulse signals belong to is determined according to the rising edge time of the pulse signal and the initial reference time.

For example, FIG. 5 is a schematic diagram of multi-tag synchronous transmission according to an embodiment of this application. In a multi-tag scenario, a sending sequence for the tags is 1, 2, 3, ..., and N, and the UWB base station knows the sending sequence for the tag 1 to the tag N. A schematic diagram of pulse signal superposition is shown in FIG. 5. A process of demodulating a modulated signal is described as follows:

First, a time-domain location t₁ of the first pulse signal is obtained and used as initial reference time t_{r,1} for the tag 1. Then, calculation of t₂ - t₁ starts from the second pulse. If t₂ - t₁ = kT, k is any positive integer, it is considered that a tag category that a pulse signal at a moment t₂ belongs to is the tag 1, and the tag 1 is a target tag; or if t₂ - t₁ ≠ kT, a pulse signal at a moment t₂ belongs to the tag 2, where the tag 1 is used as a target tag, and t₂ is used as initial reference time t_{r,2} for the tag 2. For further description, it is first assumed that t₂ - t₁ ≠ kT, and a pulse time location t₃ of a rising edge or a falling edge of a next valid pulse signal is further checked, to calculate t₃ - t_{r,1} and t₃ - t_{r,2}. If t₃ - t_{r,1} is an integer multiple of a symbol period T, a pulse at t₃ belongs to the tag 1; or if t₃ - t_{r,2} is an integer multiple of a symbol period T, a pulse at t₃ belongs to the tag 2.

If neither of the difference values is an integer multiple of T, the pulse at the moment t₃ belongs to the tag 3, and t₃ is used as initial reference time t_{r,3} for the tag 3. By analogy, when t_{r,1}, t_{r,2}, . . . , t_{r,i} (i < N) is already determined, a tag that a pulse at a moment tⱼ belongs to is determined as follows: For all cases of l = 1, 2,...,i, tⱼ - t_{r,l} is calculated, and if for a particular l₀, tⱼ - t_{r,l₀} is an integer multiple of T, the pulse at the moment tⱼ belongs to the tag l₀; or if not any of l difference values is an integer multiple of T, it is considered that the pulse at tⱼ belongs to a tag i + 1, and tⱼ is used as initial reference time t_{r,i+1} for the tag i + 1. After all N pieces of initial reference time are determined, no new reference time is added. For subsequent tₖ, N difference values in tₖ - t_{r,l} (l = 1, 2, ..., and N) are calculated, where only one particular l₀ is present, such that tₖ - t_{r,l₀} is an integer multiple of T, and correspondingly, a pulse at the moment tₖ belongs to the tag l₀.

In some embodiments, determining in sequence, according to the rising edge time and the initial reference time, the tag category that the pulse signals belong to, or determining in sequence, according to the falling edge time and the initial reference time, the tag category that the pulse signals belong to includes: determining, according to a value of time difference between the rising edge time and the initial reference time, the tag category that the pulse signals belong to, or determining, according to a value of time difference between the falling edge time and the initial reference time, the tag category that the pulse signals belong to.

In this embodiment, when the tag category that the pulse signals belong to is determined in sequence according to the value of time difference between the rising edge time and the initial reference time, or the tag category that the pulse signals belong to is determined according to the value of time difference between the falling edge time and the initial reference time, a target tag corresponding to the initial reference time is first determined; and the tag category that the pulse signals belong to is determined according to the value of time difference and the target tag.

For example, when it is determined that the target tag corresponding to the initial reference time is the tag 1, as the N pulse signals are sent in sequence, the initial reference time for the tag 1 is set to t₁. To be specific, t_{r,1} = t₁.The rising edge time or the falling edge time corresponding to the valid pulse signal is t₁, t₂, ..., and tₘ respectively.

In this case, a variable parameter j is set, used for traversing m valid pulse signals, and initialized to 2. The determining starts from a valid pulse signal at the moment t₂, and a tag that a pulse at the moment tⱼ belongs to is determined.

When a tag that rising edge moment tⱼ of a j^{th} valid pulse signal belongs to is being determined, if initial reference time of the first i tags is t_{r,1}, t_{r,2}, ..., and t_{r,i}, where 1 ≤ i ≤ N, a tag corresponding to next initial reference time to be updated is i + 1, that is, t_{r,i+1}.

An initialized variable parameter is set to k, used for traversing the initial reference time of the known i tags, and initialized to 1. Starting from t_{r,1}, tⱼ - t_{r,k} is calculated. If tⱼ - t_{r,k} is an integer multiple of the symbol period T of the pulse signal, it is considered that tⱼ belongs to a tag k; or if tⱼ - t_{r,k} is not an integer multiple of the symbol period T of the pulse signal, whether k is greater than i is determined. If no, k is updated to k + 1, and whether tⱼ - t_{r,k} is an integer multiple of the symbol period T of the pulse signal is determined again. The determining is cyclical and sequential, until all i pieces of initial reference time are completely traversed. Meanwhile, whether j exceeds m, that is, whether all m tags are traversed, is determined. If yes, the determining ends; or if no, j is updated to j + 1, and a next tⱼ is determined again. The determining is cyclical and sequential, until all the m tags are finished with the determining, where the tag that the pulse at the moment tⱼ belongs to is determined, and the initial reference time for the tag is updated, where a scope for the update includes in sequence t_{r,1}, t_{r,2}, ..., and t_{r,N}.

In some embodiments, determining, according to the value of time difference and the target pulse signal, the tag category that the pulse signals belong to includes: determining that the pulse signals belong to the target tag when the value of time difference is equal to an integer multiple of a symbol period of the target tag; or updating the initial reference time to obtain updated initial reference time when the value of time difference is not equal to an integer multiple of a symbol period of the target tag and determining of the category that the pulse signals belong to is not completely finished; and determining, according to the updated initial reference time and the rising edge time of the valid pulse signal, the tag category that the pulse signals belong to.

In this embodiment, when tⱼ - t_{r,k} is being calculated, if tⱼ - t_{r,k} is an integer multiple of the symbol period T of the pulse signal, it is considered that tⱼ belongs to a tag k; or if tⱼ - t_{r,k} is not an integer multiple of the symbol period T of the pulse signal, whether k is greater than i is determined. If no, k is updated to k + 1, and whether tⱼ - t_{r,k} is an integer multiple of the symbol period T of the pulse signal is determined again. The determining is cyclical and sequential, until all i pieces of initial reference time are completely traversed.

In some embodiments, after determining in sequence, according to the falling edge time and the initial reference time, the tag category that the pulse signals belong to, the method further includes: performing an action of ending demodulation of the modulated signal when a quantity of tags corresponding to the rising edge time of the valid pulse signal exceeds a preset tag quantity.

In this embodiment, when the quantity of tags corresponding to the rising edge time of the valid pulse signal exceeds the preset tag quantity, it is considered that tⱼ does not belong to any one of all the i tags. If i + 1 exceeds a total quantity of tags, that is, value assignment updates for initial reference time of all the N tags are completed, an error occurs, because tⱼ must belong to one of the N tags; or if the opposite occurs, it is a normal case.

In some embodiments, the communication method further includes: performing an action of demodulating the modulated signal when the quantity of tags corresponding to the rising edge time of the valid pulse signal does not exceed the preset tag quantity.

In this embodiment, if i + 1 does not exceed the total quantity of tags, initial reference time for an (i + 1)^{th} tag is assigned to tⱼ, that is, t_{r,i+1} = tⱼ, and it is determined that the pulse at the moment tⱼ belongs to the tag i + 1.

UWB tag transmission is used as an example below to describe a process of multi-UWB tag synchronous transmission.

As shown in FIG. 4, the first target tag and the second target tag transmit different bit contents in a plurality of symbol periods. If the contents are synchronously sent with a specific time offset, an obtained superposed signal is shown in the third subgraph. In this figure, a shape, a time-domain location, and rising edge and falling edge locations of each narrow pulse can be clearly distinguished. Because two tags simultaneously send a bit 1 within the first and the fourth symbol periods, two narrow pulses are adjacent to each other in one symbol period.

After receiving the superposed signal, the receiver end needs to determine which pulse belongs to the tag 1, and which pulse belongs to the tag 2. It is assumed that m valid pulses are detected in total, and time-domain locations of the pulses are respectively t₁, t₂, ..., and tₘ, where t₁ < t₂ < ... < tₘ. The UWB base station learns a relative time sequence for the two tags (that is, the tag 1 performs sending before the tag 2) in advance, and a pulse period of each of the tags remains unchanged. Then, time-domain locations of all pulses may be determined according to rising edge locations of the pulses.

After a superposed pulse signal from the preset quantity N of UWB tags is obtained, an initial moment of the first pulse detected in the superposed pulse signal, that is, time marked for a rising edge of a narrow pulse of the tag 1, is used as the initial reference time and denoted as, for example, t_{r,1}. Similarly, time marked for rising edges of the m valid pulses subsequently detected in the superposed pulse signal is respectively used as rising edge time of the valid pulse signals and denoted as, for example, t₂, t₃, ..., and tⱼ. Because of the foregoing handshaking coordination of the UWB base station, the first pulse comes from the tag 1 that performs sending relatively earlier. In this case, second values of time differences between the rising edge time t₂, t₃, ..., and tⱼ of the valid pulse signals and the initial reference time t_{r,1} are calculated, that is, t₂ - t_{r,1}, t₃ - t_{r,1}, ..., and tⱼ - t_{r,1}, and whether each of the second values of time differences t₂ - t_{r,1}, t₃ - t_{r,1}, ..., and tⱼ - t_{r,1} is an integer multiple kT of a symbol period T of a target UWB tag is determined. If each of the second values of time differences t₂ - t_{r,1}, t₃ - t_{r,1}, ..., and tⱼ - t_{r,1} is an integer multiple kT of the symbol period T of the target UWB tag, for example, t₆ - t_{r,1} = kT, it is considered that the two narrow pulses differ by an integer number of the symbol period T of the target UWB tag, which means that the two narrow pulses come from the same tag. In this case, a UWB tag at the moment t₂ is determined as the target UWB tag.

If each of the second values of time differences t₂ - t_{r,1}, t₃ - t_{r,1}, ..., and tⱼ - t_{r,1} is not an integer multiple kT of the symbol period T of the target UWB tag, for example, t₂ - t_{r,1} ≠ kT, it is considered that the two narrow pulses do not differ by an integer number of the symbol period T of the target UWB tag, which means that the two narrow pulses do not come from the same tag. In this case, a tag category that remaining pulse signals belong to is further determined. For example, the initial reference time of the tag is updated, where a scope for the update includes in sequence t_{r,1}, t_{r,2}, ..., and t_{r,N}. After the initial reference time is updated, the tag category that the remaining pulse signal belongs to is further determined according to the updated initial reference time and the rising edge time of the valid pulse signal, until tag categories that all the M pulse signals belong to are completely determined.

To determine in sequence, according to the falling edge time of the valid pulse signal and the initial reference time, the tag category that the pulse signals belong to, the same method is used.

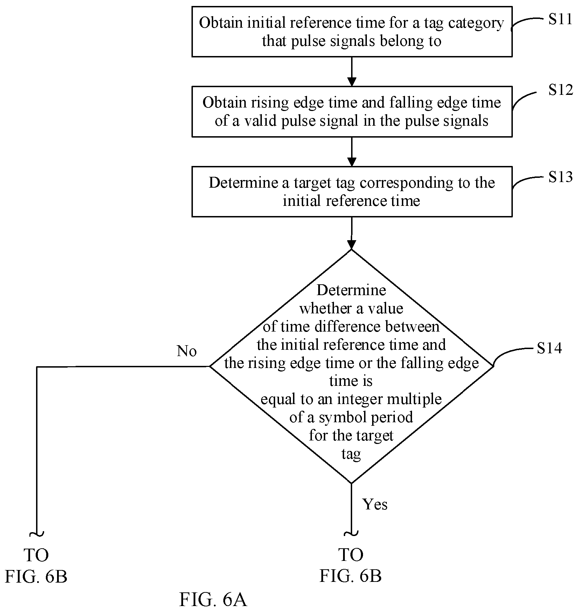

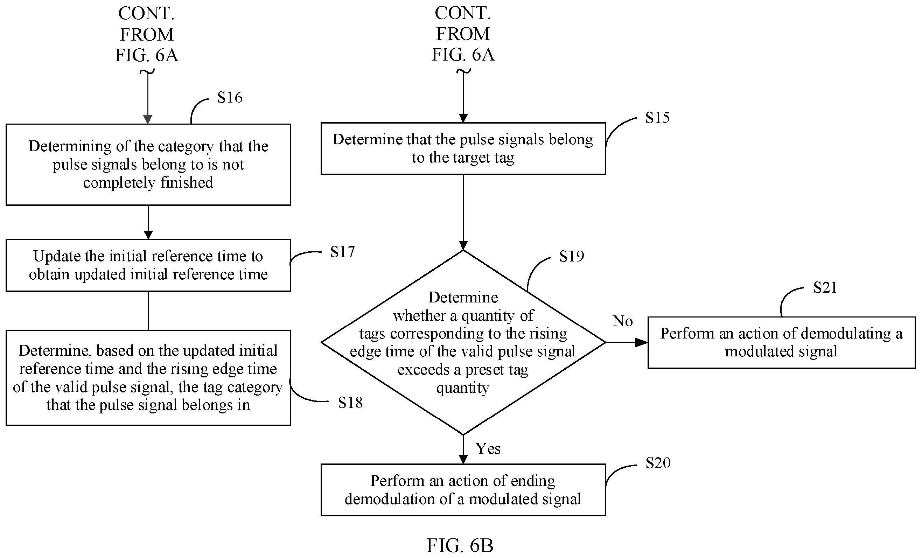

A multi-tag synchronous transmission method according to an embodiment of this application is described below by using an example with reference to FIG. 6A and FIG. 6B.

Step S11: obtain initial reference time for a tag category that pulse signals belong to.

Step S12: obtain rising edge time and falling edge time of a valid pulse signal in the pulse signals.

Step S13: determine a target tag corresponding to the initial reference time.

Step S14: determine whether a value of time difference between the initial reference time and the rising edge time or the falling edge time is equal to an integer multiple of a symbol period for the target tag; and if yes, perform step S15; otherwise, perform step S16.

Step S15: determine that the pulse signals belong to the target tag.

Step S16: determining of the category that the pulse signals belong to is not completely finished.

Step S17: update the initial reference time to obtain updated initial reference time.

Step S18: determine, according to the updated initial reference time and the rising edge time of the valid pulse signal, the tag category that the pulse signals belong to.

Step S19: determine whether a quantity of tags corresponding to the rising edge time of the valid pulse signal exceeds a preset tag quantity; and if yes, perform step S20; otherwise, perform step S21.

Step S20: perform an action of ending demodulation of a modulated signal.

Step S21: perform an action of demodulating a modulated signal.

In some embodiments, the tag category that the pulse signals belong to includes a first target tag and a second target tag, and determining, according to the initial reference time and the rising edge time of the valid pulse signal, the tag category that the pulse signals belong to, or determining, according to the initial reference time and the falling edge time of the valid pulse signal, the tag category that the pulse signals belong to includes: determining a tag corresponding to the initial reference time as the first target tag; and determining, according to the value of time difference between the initial reference time and the rising edge time of the valid pulse signal, the tag category that the pulse signals belong to, or determining, according to the value of time difference between the initial reference time and the falling edge time of the valid pulse signal, the tag category that the pulse signals belong to.

For example, determining, according to the value of time difference between the initial reference time and the rising edge time of the valid pulse signal, the tag category that the pulse signals belong to, or determining, according to the value of time difference between the initial reference time and the falling edge time of the valid pulse signal, the tag category that the pulse signals belong to includes: determining that the pulse signals belong to the first target tag when the value of time difference is an integer multiple of a symbol period of the first target tag; or determining that the pulse signals belong to the second target tag when the value of time difference is not an integer multiple of a symbol period of the first target tag.

In this embodiment, when the tag category of the pulse signal is dual-tag, a detected moment location of the first pulse, for example, a rising edge, is used as the initial reference time, where the initial reference time is denoted as, for example, t_{ref}. Because of the foregoing handshake protocol made by the UWB base station, the first pulse signal belongs to a tag 1. The tag 1 is defined as a first target tag. Starting from t₂, t₂ - t₁, that is, the value of time difference between the rising edge time of the valid pulse signal and the initial reference time, is calculated. When the value of time difference t₂ - t₁ = kT, in this case, a difference between rising edge time of two pulse signals is an integer multiple of the symbol period, which means that the two pulse signals come from the same tag. Determining for a remaining pulse signal is also performed in this way.

On the contrary, if t₂ - t₁ ≠ kT, the pulse signal corresponding to the moment t₂ does not belong to the first target tag, and therefore belongs to the second target tag. Tag information corresponding to each pulse signal may be obtained by traversing all pulses, for example, m pulses, according to this criterion for the determining. Finally, for each pulse signal, a quantity of bits 0 in the signal is determined according to an interval for a known pulse, so that demodulation can be performed. T is a fixed pulse symbol period unit, symbol periods of the two tags are the same, and k is any positive integer.

In some embodiments, whether a quantity of valid pulse signals exceeds the quantity of pulse signals or not is determined. If yes, a tag category that a UWB tag belongs to is determined according to the initial reference time and the rising edge time of the pulse signal; otherwise, it is determined that determining of the category that the valid pulse signal belongs to is completed.

In this embodiment, after it is determined that the rising edge time or the falling edge time of the valid pulse signal is respectively t₂, t₃, ..., and tᵢ, whether the quantity of valid pulse signals exceeds the quantity m of pulse signals or not is determined. If the quantity does not exceed m, that is, 1 < i < m, it is considered that the m valid pulses are not completely traversed. In this case, i = i + 1 is set, and the tag category of the UWB tag is determined again according to the initial reference time t_{ref} and t₂, t₃, ..., and tᵢ. Until i > m, it is determined that the m valid pulse signals are completely traversed, and the determining of the tag category that the valid pulse signal belongs to is completed. The rising edge time i of the valid pulse signal is a variable parameter, and a value of the rising edge time i is a natural number from 1 to the quantity m of valid pulses, where i = 2 is initially set.

For example, when the UWB tag is in a dual-tag scenario, a detected moment location of the first pulse of a superposed signal from the tag 1 and the tag 2 (all locations are marked by using a rising edge) is used as the initial reference time t_{ref}. Because of the foregoing handshaking coordination of the UWB base station, the first pulse signal definitely comes from the tag 1 that performs sending relatively earlier.

It is assumed that m valid pulses are detected in the superposed signal in total, and rising edge time of the pulses is respectively t_{ref}, t₂, ..., and tₘ. The variable parameter i is set, whose value is a natural number between 1 and m, where i = 2 is initially set. It indicates that a subsequent step is performed from the moment t₂.

If a result of t₂ - t₁ is equal to kT (T is a fixed pulse symbol period unit, the symbol periods of the two tags are the same, and k is any positive integer), that is, if t₂ - t₁ = kT, a location difference between the two pulse signals is an integer number of the symbol period, which means that the two pulses come from the same tag, and it is determined that a pulse at the current moment tᵢ belongs to the first target tag. On the contrary, if t₂ - t₁ ≠ kT, the pulse corresponding to the moment t₂ does not belong to the tag 1, and therefore belongs to the tag 2. The pulse at the current moment tᵢ belongs to the tag 2.

After the tag that the pulse belongs to corresponding to the current moment tᵢ is determined, to traverse all the m pulses, whether a current value of i is within the range of1 < i < m needs to be determined. If the value is within the range, determining for t₂ is completed in this step. This step is repeated with i = i + 1, until determining for t₃, t₄, ..., and tₘ corresponding to all the m pulses is completed. All the m valid pulses are finished with the determining, and the tag information corresponding to each of the pulses is obtained. A quantity of bits 0 in the pulse is determined according to an interval for a known pulse, to complete demodulation.

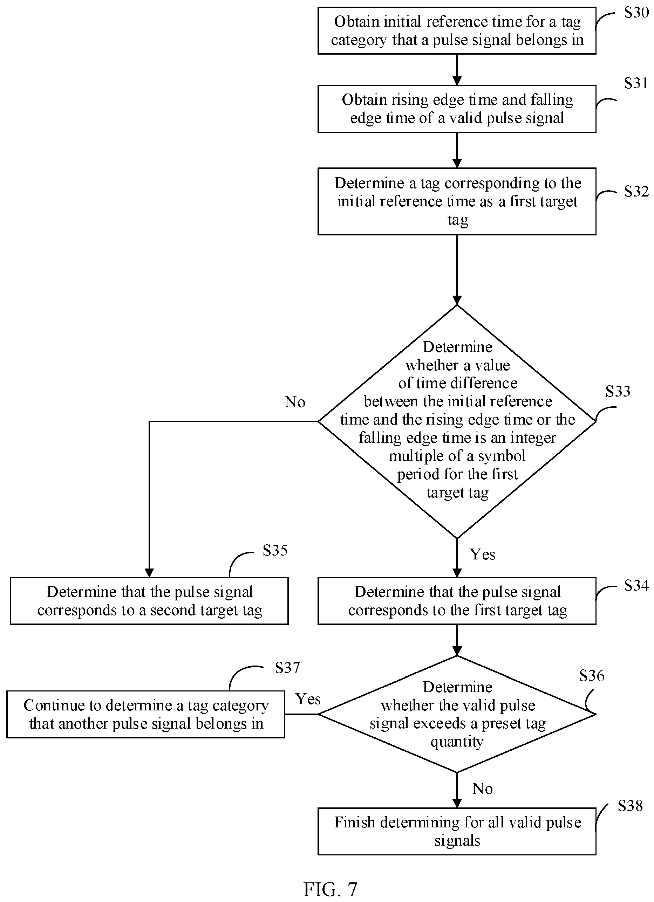

FIG. 7 is a schematic diagram of dual-tag signal synchronous transmission according to an embodiment of this application.

A communication method according to an embodiment of this application is described below by using an example with reference to FIG. 7. In this figure, a preset quantity N of UWB tags = 2, that is, a tag 1 and a tag 2.

Step S30: obtain initial reference time for a tag category that a pulse signal belongs to.

Step S31: obtain rising edge time or falling edge time of a valid pulse signal.

Step S32: determine a tag corresponding to the initial reference time as a first target tag.

Step S33: determine whether a value of time difference between the initial reference time and the rising edge time or the falling edge time is an integer multiple of a symbol period for the first target tag; and if yes, perform step S34; otherwise, perform step S35.

Step S34: determine that the pulse signal belongs to the first target tag.

Step S35: determine that the pulse signal belongs to a second target tag.

Step S36: determine whether the valid pulse signal exceeds a preset tag quantity; and if yes, perform step S37; otherwise, perform step S38.

Step S37: continue to determine a tag category that another pulse signal belongs to.

Step S38: finish determining for all valid pulse signals.

According to the communication method in this embodiment of this application, the modulated signal is received according to the start time and the synchronization time offset, and the modulated signal is demodulated after the modulated signal is received. During the demodulation of the modulated signal, as the synchronization time offset is present in sending time, a preset quantity of pulse signals to be received are received correspondingly according to the synchronization time offset, and a tag category that the pulse signal belongs to is determined after the receiving is completed. In this way, sequential demodulation of modulated signals can be achieved, and interference caused by overlapping pulse signals during the receiving is avoided, thereby avoiding affecting a demodulation process. Therefore, received modulated signals are synchronously demodulated, to reduce the limitation on a UWB transmission rate due to a distance in a mobile terminal scenario, and improve a UWB uplink synchronous transmission rate.

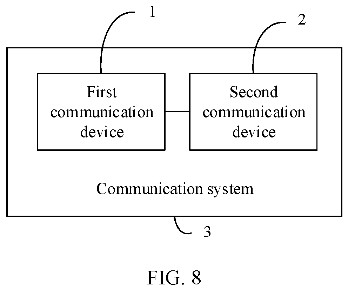

A communication system 3 according to an embodiment of this application is described below with reference to FIG. 8.

As shown in FIG. 8, the communication system 3 according to this embodiment of this application includes: a first communication device 1 and a second communication device 2. The first communication device 1 and the second communication device 2 are configured to communicate by using the communication methods according to the foregoing embodiments.

According to the communication system 3 according to this embodiment of this application, pulse signals are sent in a synchronous and interleaved way according to a start time for a modulated signal and a synchronization time offset of the pulse signals, so that valid pulses of each pulse signal within a tag symbol period are staggered and do not overlap each other, thereby avoiding interference caused by overlapping pulse signals during transmission, and achieving synchronous interleaved transmission of a modulated signal while improving the efficiency and accuracy of the synchronous transmission, to enhance the uplink transmission rate. The modulated signal is received according to the start time and the synchronization time offset, and the modulated signal is demodulated after the modulated signal is received. During the demodulation of the modulated signal, as the synchronization time offset is present in sending time, a preset quantity of pulse signals to be received are received correspondingly according to the synchronization time offset, and a tag category that the pulse signals belong to is determined after the receiving is completed. In this way, sequential demodulation of modulated signals can be achieved, and interference caused by overlapping pulse signals during the receiving is avoided, thereby avoiding affecting a demodulation process. Therefore, received modulated signals are synchronously demodulated.

A non-volatile readable storage medium according to an embodiment of this application is described below.

The non-volatile readable storage medium according to this embodiment of this application stores a communication program, and the communication program, when executed by a processor, enables the communication device equipped with the non-volatile storage medium to implement the above-mentioned communication method according to the foregoing embodiments.

In the descriptions of this specification, the reference term "an embodiment", "some embodiments", "schematic embodiments", "an example", "a specific example", or "some examples" means that a specific feature, structure, material, or characteristic described in conjunction with the embodiment or example is included in at least one embodiment or example of this application. In this specification, the schematic descriptions of the foregoing terms do not necessarily refer to the same embodiment or example.

Although the embodiments of this application are shown and described, a person of ordinary skills in the art will understand that: without departing from the principle and purposes of this application, various changes, modifications, replacements, and variants may be made on the embodiments, and the scope of this application is subject to the claims and its equivalents.

## Claims

1. A communication method, applied to a first communication device, the method comprising:
obtaining (S1) at least one of a start time for transmitting a modulated signal, a preset pulse signal quantity, and a synchronization time offset of the pulse signals relative to the start time, wherein the modulated signal comprises the preset quantity of pulse signals; and
sending (S2) the modulated signal according to the start time and the synchronization time offset.

2. The communication method according to claim 1, wherein sending (S2) the modulated signal according to the start time and the synchronization time offset comprises:
determining a transmission sequence for the pulse signals according to the start time and the synchronization time offset; and
synchronously sending the pulse signals according to the transmission sequence.

3. The communication method according to claim 2, wherein determining the transmission sequence for the pulse signals according to the start time and the synchronization time offset comprises:
obtaining the transmission sequence for the pulse signals according to the start time plus the synchronization time offset.

4. The communication method according to any one of claims 1 to 3, wherein before obtaining the start time for transmitting the modulated signal, the preset pulse signal quantity, and the synchronization time offset of the pulse signals relative to the start time, the method further comprises:
determining a multi-tag synchronous transmission mode for the modulated signal.

5. The communication method according to claim 4, wherein determining that a mode for transmitting the modulated signal is the multi-tag synchronous transmission mode comprises:
setting a preset bit in a physical-layer header data format to a first preset value.

6. The communication method according to claim 4 or 5, wherein determining that the mode for transmitting the modulated signal is the multi-tag synchronous transmission mode comprises:
determining that the mode for transmitting the modulated signal is the multi-tag synchronous transmission mode when a 17^{th} reserved bit in the physical-layer header data format is the first preset value; and
determining that the mode for transmitting the modulated signal is a regular transmission mode when the 17^{th} reserved bit in the physical-layer header data format is a second preset value.

7. The communication method according to any one of claims 1 to 6, wherein obtaining at least one of the start time for transmitting the pulse signals, the preset pulse signal quantity, and the synchronization time offset of the pulse signals relative to the start time during the signal transmission performed by the first communication device comprises:
obtaining frame payload information in a MAC control frame structure, wherein the frame payload information comprises at least one of the start time for transmitting the modulated signal, the preset pulse signal quantity, the synchronization time offset of the pulse signals relative to the start time, and a MAC address of each pulse signal.

8. A communication method, applied to a second communication device, the method comprising:
receiving (S41) a modulated signal according to a start time and a synchronization time offset;
and
demodulating (S42) the modulated signal.

9. The communication method according to claim 8, wherein the modulated signal comprises a preset quantity of pulse signals, and the demodulating the modulated signal comprises:
obtaining rising edge time of a valid pulse signal in the pulse signals and initial reference time for a tag category that the pulse signals belong to, or obtaining falling edge time of a valid pulse signal in the pulse signals and initial reference time for a tag category that the pulse signals belong to; and
determining in sequence, according to the rising edge time and the initial reference time, the tag category that the pulse signals belong to, or determining in sequence, according to the falling edge time and the initial reference time, the tag category that the pulse signals belong to.

10. The communication method according to claim 9, wherein determining in sequence, according to the rising edge time and the initial reference time, the tag category that the pulse signals belong to, or determining in sequence, according to the falling edge time and the initial reference time, the tag category that the pulse signals belong to comprises:
determining, according to a value of time difference between the rising edge time and the initial reference time, the tag category that the pulse signals belong to, or determining, according to a value of time difference between the falling edge time and the initial reference time, the tag category that the pulse signals belong to.

11. The communication method according to claim 10, wherein determining, according to the value of time difference between the rising edge time and the initial reference time, the tag category that the pulse signals belong to, or determining, according to the value of time difference between the falling edge time and the initial reference time, the tag category that the pulse signals belong to comprises:
determining a target tag corresponding to the initial reference time; and
determining, according to the value of time difference and the target tag, the tag category that the pulse signals belong to.

12. The communication method according to claim 11, wherein determining, according to the value of time difference and the target tag, the tag category that the pulse signals belong to comprises:
determining that the pulse signals belong to the target tag when the value of time difference is equal to an integer multiple of a symbol period of the target tag; or
updating the initial reference time to obtain updated initial reference time when the value of time difference is not equal to an integer multiple of a symbol period of the target tag and determining of the category that the pulse signals belong to is not completely finished; and
determining, according to the updated initial reference time and the rising edge time of the valid pulse signal, the tag category that the pulse signals belong to.

13. The communication method according to any one of claims 9 to 12, wherein after determining in sequence, according to the falling edge time and the initial reference time, the tag category that the pulse signals belong to, the method further comprises:
performing an action of ending demodulation of the modulated signal when a quantity of tags corresponding to the rising edge time of the valid pulse signal exceeds a preset tag quantity.

14. The communication method according to claim 13, further comprising:
performing an action of demodulating the modulated signal when the quantity of tags corresponding to the rising edge time of the valid pulse signal does not exceed the preset tag quantity.

15. The communication method according to claim 11 or 12, wherein the tag category that the pulse signals belong to comprises a first target tag and a second target tag, and determining, according to the initial reference time and the rising edge time of the valid pulse signal, the tag category that the pulse signals belong to, or determining, according to the initial reference time and the falling edge time of the valid pulse signal, the tag category that the pulse signals belong to comprises:
determining a tag corresponding to the initial reference time as the first target tag; and
determining, according to the value of time difference between the initial reference time and the rising edge time of the valid pulse signal, the tag category that the pulse signals belong to, or determining, according to the value of time difference between the initial reference time and the falling edge time of the valid pulse signal, the tag category that the pulse signals belong to.

16. The communication method according to claim 15, wherein determining, according to the value of time difference between the initial reference time and the rising edge time of the valid pulse signal, the tag category that the pulse signals belong to, or determining, according to the value of time difference between the initial reference time and the falling edge time of the valid pulse signal, the tag category that the pulse signals belong to comprises:
determining that the pulse signals belong to the first target tag when the value of time difference is an integer multiple of a symbol period of the first target tag; or
determining that the pulse signals belong to the second target tag when the value of time difference is not an integer multiple of a symbol period of the first target tag.

17. A communication system (3), comprising:
a first communication device (1); and
a second communication device (2), wherein the first communication device (1) and the second communication device (2) are configured to communicate by using the communication method according to any one of claims 1 to 16.

18. A non-volatile readable storage medium, the non-volatile readable storage medium storing a communication program that, when executed by a processor, enables a communication device equipped with the non-volatile storage medium to implement the communication methods according to any one of claims 1 to 16.
